**Europäisches Patentamt**

**European Patent Office**

**Office européen des brevets**

(19)

(11) Veröffentlichungsnummer: **0 105 229**
A2

## (12) EUROPÄISCHE PATENTANMELDUNG

(21) Anmeldenummer: 83108926.3

(22) Anmeldetag: **09.09.83**

(51) Int. Cl.³: **G 01 M 3/28**

---

(30) Priorität: **10.09.82 DE 3233647**

(43) Veröffentlichungstag der Anmeldung: **11.04.84**
**Patentblatt 84/15**

(84) Benannte Vertragsstaaten: **AT BE CH DE FR GB IT LI LU NL SE**

(71) Anmelder: **Heide, Gerhard, Willbeckerstrasse 30, D-4006 Erkrath 2 (DE)**

(72) Erfinder: **Heide, Gerhard, Willbeckerstrasse 30, D-4006 Erkrath 2 (DE)**

(74) Vertreter: **Melzer, Wolfgang, Dipl.-Ing. et al, Patentanwälte Dipl.-Ing. H. Mitscherlich Dipl.-Ing. K. Gunschmann Dipl.-Ing. Dr. rer. nat. W. Körber Dipl.-Ing. J. Schmidt-Evers Dipl.-Ing. W. Melzer, Steinsdorfstrasse 10 D-8000 München 22 (DE)**

---

(54) **Verfahren zur Überprüfung eines vermaschten Leitungsnetzes auf Leckverluste.**

(57) Die Erfindung beschreibt ein Verfahren zur Überprüfung eines vermaschten Leitungsnetzes auf Leckverluste, bei dem Unterleitungsnetze gebildet werden und mindestens eine Durchflusseigenschaft an ortsfesten Kontrollstellen für das Unterleitungsnetz zu bestimmten Zeiten über einen stets gleichen (ersten) Messzeitraum aufgezeichnet und ausgewertet wird, wobei neben dem ersten Messzeitraum mindestens ein weiterer Messzeitraum am gleichen Tag gewählt wird und die erhaltenen Messwerte sowohl untereinander als auch mit Messwerten anderer Gebiete verglichen werden.

Die Erfindung eignet sich insbesondere für vermaschte Trinkwasserleitungsnetze aber auch andere vermaschte Leitungsnetzte.

Verfahren zur Überprüfung eines vermaschten Leitungsnetzes auf Leckverluste

Die Erfindung betrifft ein Verfahren zur Überprüfung eines vermaschten Leitungsnetzes, insbesondere eines Trinkwasserleitungsnetzes auf Leckverluste gemäß dem Oberbegriff des Anspruches 1.

Ein solches Verfahren zur Überprüfung auf Leckverluste wird durch die DE-OS 28 41 674 (entsprechend EU-PS 0009263) angegeben. Es werden Unter-Leitungsnetze durch Kontrollstellen, an denen mindestens eine Durchflußeigenschaft zu bestimmten Zeiten über einen bestimmten Meßzeitraum, vorzugsweise automatisch aufgezeichnet und ausgewertet wird, gebildet und wird dabei die Durchflußeigenschaft an allen Kontrollstellen während solcher Zeiten, während denen die regelmäßig gemessene Durchflußeigenschaft über längere Zeiträume im wesentlichen konstant bleibt, im wesentlichen gleichzeitig und während eines stets gleichen Meßzeitraumes von etwa einer halben Stunde täglich oder mindestens einmal wöchentlich erfaßt. Das bekannte Verfahren geht von der Überlegung aus, daß, wenn der Durchfluß an der Kontrollstelle z. B. eines Trinkwasserverteilungsnetzes im wesentlichen konstant ist, eine Auslegung des Meßwertes Nachtverbrauch + Wasserverluste, im folgenden (N+W), eine Beurteilung der Wasserverluste zuläßt.

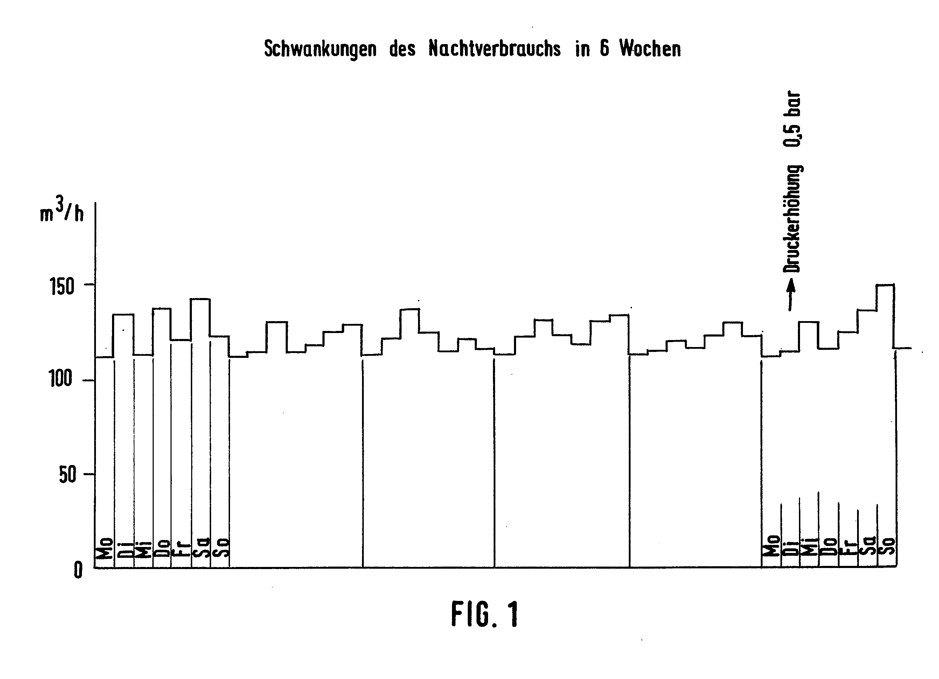

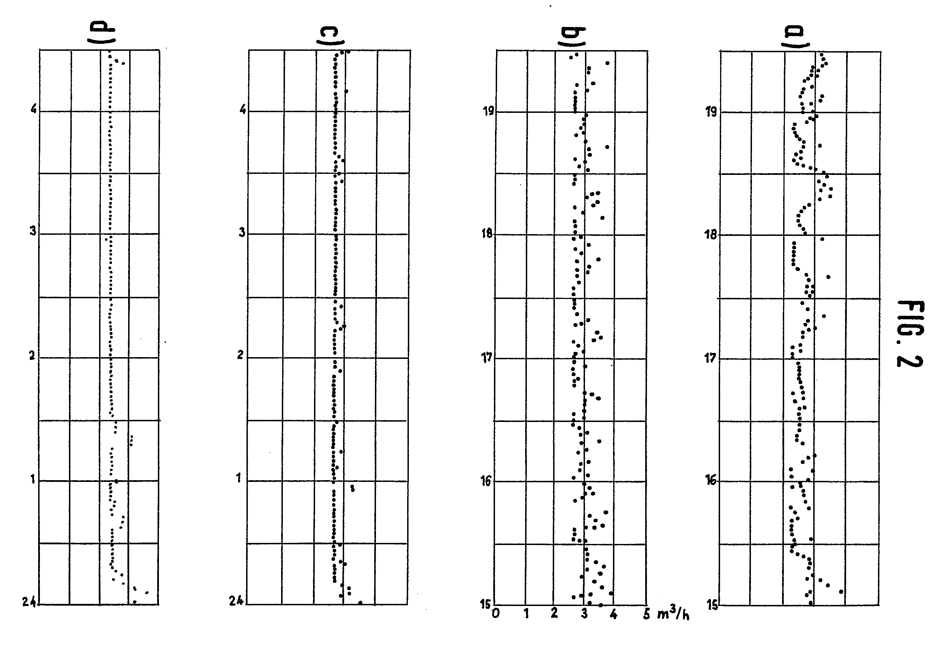

Wie die Anwendung dieses Verfahrens zeigt, unterliegt der in Figur 1 dargestellte Meßwert N + W jedoch gewis-sen Schwankungen, die sich von Tag zu Tag ändern und in der Regel an einem bestimmten Tag, in der Bundesrepublik Deutschland in der Nacht von Sonntag auf Montag, ein Minimum erreichen. Die Schwankungen des Meßwertes N + W sind bedingt durch Schwankungen des Verbrauchs, aber auch durch Schwankungen der Verluste, wie das in Figur 2 dargestellt ist.

Die horizontalen Punktreihen in Figur 2 zeigen deutlich Zeiten eines Null-Verbrauchs an und zwar in einem Gebiet, in dem durch ein Leck ständig Wasser entweicht. Von besonderer Bedeutung (vergl. insbesondere Fig. 2 c und 2 d) ist die Beobachtung, daß die Null-Verbrauchslinie an verschiedenen Tagen in unterschiedlichem Abstand zur Null-Linie des Schreibstreifens des Registriergerätes (Punktschreiber) verläuft.

Ferner ist bei der Auswertung der Meßwerte auf solchen Schreibstreifen in größeren Kontrollgebieten, in denen ein ständiger Verbrauch stattfindet, eine Parallelverschiebung der Nachtverbrauchslinie N + W zu beobachten. Der Erfinder konnte nun feststellen, daß Verbrauchsschwankungen, bzw. Verhältniszahlen der Verbrauchsschwankungen mit zunehmender Größe einer Kontrollzone abnehmen. Es kann somit gefolgert werden, daß sowohl Wasserverluste als auch die Nachtverbrauchswerte Schwankungen unterworfen sind. Dies kann zu fehlerhaften Auswertungen - Feststellen eines tatsächlich nicht vorhandenen Lecks und umgekehrt - führen.

Es ist daher Aufgabe der Erfindung, das eingangs genannte Verfahren dahingehend zu verbessern, daß Auswertefehler weitestgehend vermieden werden.

Die Aufgabe wird erfindungsgemäß durch das Verfahren gemäß dem Anspruch 1 gelöst.

Die Erfindung wird durch die Merkmale der Unteransprüche weitergebildet.

Die Schwankungen der Wasserverluste sind, wie bereits bekannt ist, zunächst durch Druckänderungen im Rohrnetz zu erklären, jedoch müßte auch festgestellt werden, daß die Verluste auch ohne nennenswerte Druckänderungen durch Förderanlagen, Wasserstandsänderungen in Vorratsbehältern, unterschiedlich sein können. Bisher konnte dieses Phänomen nicht erklärt werden, jedoch ist allein die Festellung des Auftretens dieses Phänomens von Bedeutung. Das erfindungsgemäße Verfahren beruht auf dieser Erkenntnis und erreicht, daß die Überprüfung auf Wasserverluste wesentlich verbessert wird.

Die Figuren der Zeichnung zeigen:

Figur 1 eine Darstellung der Schwankungen des Nachtverbrauchs in 6 Wochen,

Figur 2 Schreibstreifen mit Meßwerten N + W,

Figur 3 eine Darstellung der Häufigkeit der Minimalwerte des Nachtverbrauchs bei einer Meßzeit von 2,5 min über 70 Tage,

Figur 4 eine Darstellung der Verhältniszahlen des Nachtverbrauchs bei einer Meßzeit montags von $2^{45}$ bis $3^{15}$ h für zwei Gebiete A und a über ein Jahr.

Die Figuren 1 und 2 wurden bereits erläutert.

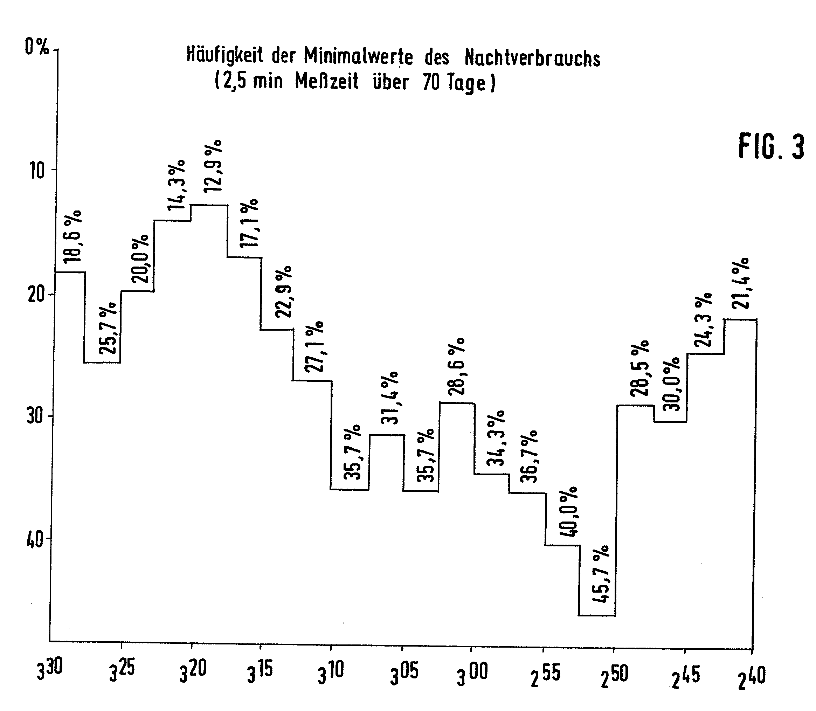

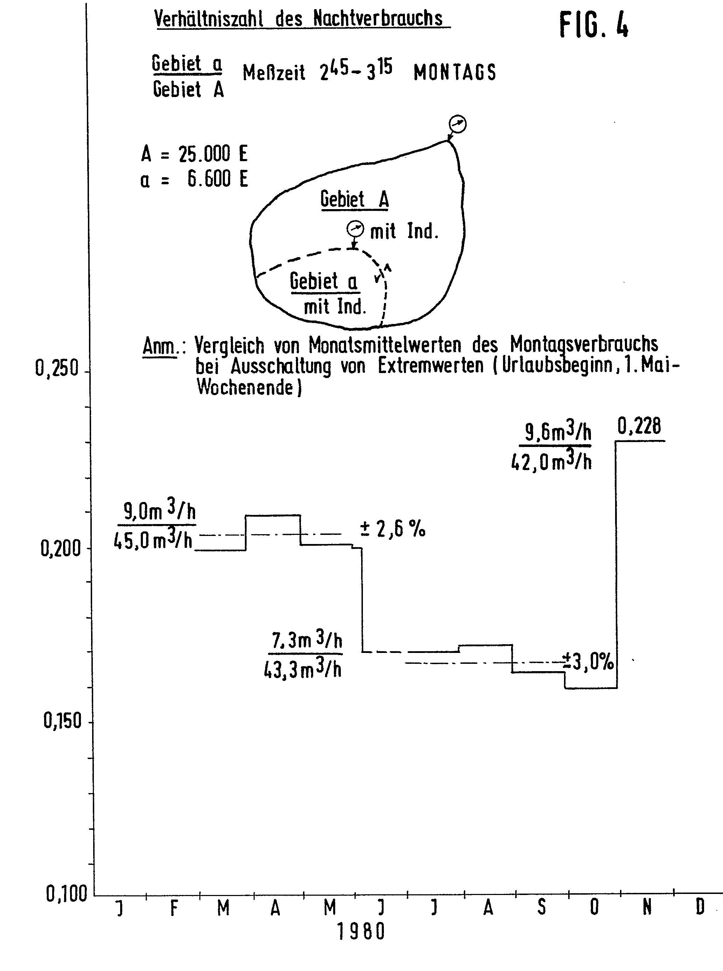

Die Durchführung des erfindungsgemäßen Verfahrens wird anhand der Figuren 3 und 4 näher erläutert.

Schritt 1. Optimale Meßzeit

Um die Meßzeit zu ermitteln, in der das Minimum des Meßwertes N + W am häufigsten auftritt, wurden Schreibstreifen ausgewertet, die durch einen schnell laufenden Linienschreiber aufgezeichnet wurden. Hieraus ergibt sich die Häufigkeit des Auftretens des Minimums in Meßzeiträumen von 2,5 min, wie das in Figur 3 dargestellt ist.

Bereits dadurch wird das bekannte Verfahren verbessert. Es zeigt sich, daß der eigentliche, wesentliche Meßzeitraum, in dem das Minimum des N + W Wertes auftritt, kürzer ist, als eine halbe Stunde, z. B. (für die Bundesrepublik Deutschland) von

$$2^{50} - 2^{55} \quad \text{oder}$$
$$2^{50} - 2^{52,5}$$

Schritt 2. Berücksichtigung normaler Schwankungen des Meßwertes N + W in Gebieten unterschiedlicher Größe.

Es werden zunächst aufgrund von Schätzungen des Grund-Wasserverbrauchs in der Nacht (Liter pro Einwohner und Stunde) und unter Berücksichtigung eines zulässigen Wasserverlustwertes in cbm pro Stunde und km feste Sollwerte (zulässiger Nachtverbrauch) ermittelt, die dann mit tatsächlichen Ist-Meßwerten verglichen werden. Hierbei ergaben sich folgende vom Auswertegerät unabhängige Verhältniszahlen:

0105229

Messung N + W von 02.50 - 02.56

| Einwohner je Gebiet | Zulässiger Wert N + W |
|---|---|
| 500 | 1,65 |
| 1000 | 1,61 |
| 1500 | 1,58 |
| 2000 | 1,56 |
| 2500 | 1,54 |
| 3000 | 1,51 |
| 3500 | 1,48 |
| 5000 | 1,42 |
| 8000 | 1,38 |
| 11000 | 1,36 |
| 14000 | 1,32 |
| 17000 | 1,32 |
| 20000 | 1,32 |
| 23000 | 1,32 |
| 26000 | 1,32 |
| 29000 | 1,31 |
| 30000 | 1,2 - 1,3 |

Wenn auch die Verhältniszahlen von Gebiet zu Gebiet im einzelnen schwanken können, so ist jedoch die Berücksichtigung der Gebietsgröße bei der Ermittlung von Wasserverlusten ein wesentlicher Schritt zur genaueren Wasserverlustkontrolle. Insbesondere wird erreicht, daß bei geeigneter Wahl der Meßzeit und unter Berücksichtigung von Schwankungen des Meßwertes N + W vergleichsweise kleine Lecks erfaßt werden können, das heißt, es kann eine Wasserverlustkontrolle auch in größeren Gebieten wesentlich effizienter durchgeführt werden.

Schritt 3. Vergleich von Meßwerten N + W

In Figur 4 sind ein Kontrollgebiet A (25.000 E) und ein kleineres Kontrollgebiet a (6.600 E) im ersteren Kontrollgebiet A dargestellt.

Die Meßwerte N + W werden regelmäßig in der Zeit von (z. B.) montags $2^{45}$ - $3^{15}$ gemessen und die erhaltenen Werte ins Verhältnis gesetzt und die Durchschnittswerte dieser Verhältniszahlen über den Monat (4 Werte) gebildet. Bei dem Vergleich wurden Extremwerte (Urlaubsbeginn, 1. Mai) nicht berücksichtigt. Es stellte sich heraus, daß die Verhältniszahlen bzw. deren Mittelwerte nur um $\pm$ 2,6 - $\pm$ 3,0 % schwanken, so daß vergleichsweise geringe Änderungen, z. B. die Beseitigung eines Rohrschadens mit einem Verlust von 1,7 m³/h im Gebiet a eine deutliche Verschiebung der Verhältniszahl $\frac{\text{Meßwert a}}{\text{Meßwert A}}$ ergeben.

In gleicher Weise werden auch Meßwerte des Nachtverbrauchs mit (weiteren) Meßwerten während des (gleichen) Tages an ein und derselben Meßstelle untersucht, was ebenfalls zu der Erkenntnis führt, daß der Vergleich von solchen Meßwerten ein weiterer wesentlicher Schritt zur Verbesserung über die Aussage hinsichtlich der Wasserverluste ist.

Insbesondere ergibt sich, daß die Durchführung von Messungen zu festen Meßzeiten die notwendigen Vergleichsmöglichkeiten bieten, die nicht bestehen, wenn Meßstellen lediglich das Verbrauchsminimum, welches an Meßstellen zu verschiedenen Zeitpunkten auftreten kann, ermitteln.

Beispielsweise können die 24 Meßzeiten (Stundenverbrauch) des gesamten Tagesverbrauchs regelmäßig beurteilt werden nach

- Hauptverbrauchszeit
- Meßwert N + W während der Schwachlastzeit

Letzterer wird wie folgt definiert.

Drückt man, wie in der Wasserversorgungstechnik üblich, den Stundenverbrauch in % des Tagesverbrauchs aus, so ergeben 24 h = 100 % des Tagesverbrauchs. Der durchschnittliche Stundenverbrauch beträgt dann $\frac{100}{24} = 4,1666$ % der gesamten Tagesdurchflußmenge.

Die Schwachlastzeit wurde als diejenige Tageszeit gewählt, in der der Stundenverbrauch kleiner als 4,1666 % ist.

Wenn man den Stundenverbrauch (24 Meßzeiträume eines Tages) in % des Tagesverbrauchs ausdrückt und alle Werte kleiner als 4,1666 % aufaddiert und durch die entsprechende Anzahl der Stunden dividiert, so ergibt sich für jedes Versorgungsgebiet ein spezifischer %-Wert der Schwachlastzeit, der umso höher liegt je höher die Wasserverluste des Versorgungsgebietes sind.

Auf diese Weise lassen sich Kontrollzonen bereits nach einer ersten Messung des Stundenverbrauchs über volle 24 h von 00.00 - 24.00 eines Tages bezüglich der Wasserverluste klassifizieren.

Der wesentliche Vorteil der Kombination aus Kurzzeitmessung mit der Berücksichtigung von Schwankungen des Meßwertes N + W und aus Einführung des Vergleichs von bestimmten Meßwerten z. B. der montags gemessenen Meßwerte oder der statistisch ermittelten Meßwerte, die am häufigsten ein Minimum zu einer gegebenen Zeit erreichen, liegt in der Früherkennung vergleichsweise kleiner Lecks in vergleichsweise großen Kontrollzonen.

Damit wird einmal die Zahl der vorzusehenden Kontrollstellen geringer, d. h. diese kann im wesentlichen, wenn nicht ausschließlich, nach rein wirtschaftlichen Gesichtspunkten gewählt werden. Zum anderen wird die Übermittlung und Auswertung, z. B. Fernübertragung, von wenigen, wesentlichen Werten, die zur Wasserverlustkontrolle und damit zur Überwachung auf Leckverluste dienen, auf relativ wenige Meßstellen beschränkt, die als übergeordnet bezeichnet werden könnten.

Weiterhin bietet die Kombination die Möglichkeit einer einfachen und effizienten Gestaltung von Computerprogrammen zur Auswertung, die entweder an einer Meßstelle selbst oder in einer Zentrale verwendet werden. Hierbei ist auch wesentlich, daß die Meßstelle so gestaltet werden kann, daß in ihr Auswertungen stattfinden, so daß nur wenige Informationen zur Zentrale übertragen werden müssen.

Die erwähnten weiteren Meßzeiträume können daher ständig abgefragt und ausgewertet werden. Es reicht jedoch bereits aus, dann, wenn sich bei dem Auswerten des ersten Meßzeitraumes (gemäß dem gekannten Verfahren) der Verdacht auf das Vorliegen eines Lecks ergibt, die weiteren Meßzeiträume abzufragen. Es hat sich nämlich bestätigt, daß das Verbrauchsverhalten über den Tagesablauf statistischen Gesetzmäßigkeiten unterliegt, wodurch neu entstenhende Lecks auch auf zu anderen Tageszeiten erfaßte Meßwerte erkennbaren Einfluß ausüben. Zum Beispiel ist festzustellen, daß während des Tages, wenn auch in vergleichsweise kurzen Zeiträumen, in einem Versorgungsgebiet eine nahezu stets gleiche Menge Wasser verbraucht wird, bedingt durch besondere Verbrauchszeiten, wie Frühstückspause, Mittagspause, Haupteinkaufszeit, etc. Somit bietet sich an, neben einem ersten und zweiten spezifischen Meßwert auch noch einen dritten Meßwert oder sogar noch weitere wie z. B. 24 h Meßwerte, siehe oben, für die Wasserverlustkontrolle zu verwenden.

Die Bewertung der Wasserverluste eines Kontrollgebietes wird insbesondere noch dadurch verbessert, daß von den Meßwerten 1-3 etc. 7 Tagesmittelwerte gebildet werden, wodurch tagesspezifische Abweichungen von einer durchschnittlichen Menge N + W ausgeglichen werden. Darüber hinaus können aktuelle Meßwerte N + W des Nachtverbrauchs zu den 7 Tagesmittelwerten des Tagesverbrauchs ins Verhältnis gesetzt werden, sodaß hierdurch wiederum, ähnlich wie in den Erläuterungen zu Fig. 4 dargelegt, Wasserverluste durch die Verschiebung von Verhältniszahlen erkennbar werden.

Genauso wie es täglich Zeiten mit einer vergleichsweise konstanten Verbrauchsmenge in einer begrenzten Zeit gibt, kann aber auch der Stundenverbrauch jeder der 24 h eines Tages, bedingt durch die Gesetzmäßigkeit des Tagesablaufs des Verbrauchsverhaltens zur Wasserverlustkontrolle verwendet werden. Natürlich ist bei dem Tagesverbrauch zu unterscheiden nach Stunden, in denen der Verbrauch weniger schwankt als in anderen Stunden. So eignen sich z. B. die Vormittagsstunden 06.00 - 08.00 h weniger als Nachmittagsstunden 13.00 - 17.00 h für eine Analyse der Wasserverluste. Die Beobachtung des Stundenverbrauchs ist besonders wesentlich für die Einkreisung von Schadstellen, wenn diese tagsüber vorgenommen werden soll. Zunächst einmal wird der Stundenverbrauch eines Kontrollgebietes über 7 Tage oder länger beobachtet, so daß verbrauchspezifische Werte in Liter pro Einwohner und Stunde (l/E/h) ermittelt werden. Wird nun an einer Kontrollstelle durch die automatische Kontrollmessung des Nachtverbrauchs (Meßwert 1) eine Schadstelle gemeldet, so beeinflußt die Verlustmenge naturgemäß auch den spezifischen Verbrauch l/E/h. Um nun festzustellen, in welchem Teil einer Kontrollzone der Rohrschaden aufgetreten ist, kann tagsüber eine Unterteilung der Kontrollzone durch Abschieberungen vorgenommen werden, sodaß der Stundenverbrauch N + W, der durch 2 Meßstationen in jeder der Unterkontrollzonen erfasst wird, Aufschluß darüber gibt, in welchem Teil der Kontrollzone die Schadstelle aufgetreten ist und durch schrittweise Abschieberungen weiter einzukreisen ist, sodaß zuletzt die Feinortung der Schadstelle erfolgen kann.

Des weiteren bietet die statistische Gesetzmäßigkeit des Verbraucherverhaltens über den Tagesablauf noch mehrere Kontrollmöglichkeiten. Insbesondere die statistisch zu jeweils gleichen Zeiten auftretenden Zeiträume maximalem und halbem maximalen Verbrauchs eignen sich für solche weiteren Meßzeiträume, zumal deren Meßwerte aus anderen Gründen häufig erwünscht sind. Jedoch kann auch eine Auswertung zu ganz bestimmten Uhrzeiten zum gleichen Ergebnis führen.

Die Erfindung ist in gleicher Weise auch bei anderen vermaschten Leitungsnetzen anwendbar. Beispielsweise können bei Abwasserleistungsnetzen Lecks erfasst werden, die eine Infiltration (von außen) und/oder eine Exfiltration (nach außen) verursachen, was unerwünscht ist.

0105229

Patentansprüche

1) Verfahren zur Überprüfung eines vermaschten Leitungsnetzes auf Leckverluste,
bei dem Unterleitungsnetze gebildet werden und mindestens
eine Durchflußeigenschaft an ortsfesten Kontrollstellen
für das Unterleitungsnetz zu bestimmten Zeiten über einen
stets gleichen (ersten) Meßzeitraum aufgezeichnet und
ausgewertet wird,
dadurch gekennzeichnet,
daß neben dem ersten Meßzeitraum mindestens ein weiterer
Meßzeitraum am gleichen Tag gewählt wird und
daß die erhaltenen Meßwerte sowohl untereinander als auch
mit Meßwerten anderer Gebiete verglichen werden.

2) Verfahren nach Anspruch 1, dadurch gekennzeichnet,
daß die Meßwerte weiterer Meßzeiträume nur erfaßt und ausgewertet werden, wenn im ersten Meßzeitraum ein auf ein
Leck hinweisendes Meßergebnis erhalten worden ist.

0105229

3) Verfahren nach Anspruch 1 oder 2, dadurch gekennzeichnet,
daß erster und weitere Meßzeiträume bestimmten Uhrzeiten zugeordnet sind.

4) Verfahren nach Anspruch 1 oder 2, dadurch gekennzeichnet,
daß weitere Meßzeiträume bestimmten Verbrauchswerten, wie maximalem oder halbem maximalen Verbrauch, zugeordnet sind.

5) Verfahren nach einem der Ansprüche 1 bis 4, dadurch gekennzeichnet,
daß der erste Meßzeitraum dem minimalen, insbesondere dem Null-Verbrauch zugeordnet ist.

6) Verfahren nach einem der Ansprüche 1 bis 4, dadurch gekennzeichnet,
daß der erste Meßzeitraum dem minimalen, insbesondere dem Null-Verbrauch zugeordnet ist.

7) Verfahren nach einem der Ansprüche 1 bis 6, dadurch gekennzeichnet,
daß zur besseren Vergleichbarkeit der Meßwerte Gebietskonstanten eingeführt werden, die natürliche Schwankungen der Wasserverlustmengen und der Wasserverbrauchsmengen berücksichtigen.

8) Verfahren nach Anspruch 7, dadurch gekennzeichnet,
daß die Gebietskonstanten einwohnerzahlabhängig sind.

9) Verfahren nach einem der Ansprüche 1 bis 8, dadurch gekennzeichnet,
daß die Meßwerte durch die automatische Bildung von Mittelwerten und Verhältniszahlen und durch den Vergleich mit zuvor ermittelten Erfahrungswerten aufbereitet werden.

0105229

10) Verfahren nach einem der Ansprüche 1 bis 9,
dadurch gekennzeichnet,
daß die Auswertungen der Messungen vorort
an der Meßstelle selbst durchgeführt werden.

11) Verfahren nach einem der Ansprüche 1 bis 10,
dadurch gekennzeichnet, daß entweder die direkte
Messung in zwischengespeicherter Form oder die
Ergebnisse der Auswertung vorort an der Meßstelle
über Fernübertragungswege in eine Zentrale übermittelt werden.

# Schwankungen des Nachtverbrauchs in 6 Wochen

FIG. 1

# FIG. 2

Häufigkeit der Minimalwerte des Nachtverbrauchs
(2,5 min Meßzeit über 70 Tage)

FIG. 3

FIG. 4

Verhältniszahl des Nachtverbrauchs

$\dfrac{\text{Gebiet a}}{\text{Gebiet A}}$ Meßzeit $2^{45}-3^{15}$ MONTAGS

A = 25.000 E
a = 6.600 E

Gebiet A

⊘ mit Ind.

$\dfrac{\text{Gebiet a}}{\text{mit Ind.}}$

Anm.: Vergleich von Monatsmittelwerten des Montagsverbrauchs bei Ausschaltung von Extremwerten (Urlaubsbeginn, 1.Mai-Wochenende)